# EUROPEAN PATENT APPLICATION

(11) **EP 4 596 328 A2**
(43) Date of publication of application: **06.08.2025**
(21) Application number: 25173483.6
(22) Date of filing: 16.04.2021
(51) Int. Cl.: B60R 13/00

(54) **AUTOMOTIVE BODYWORK PART COMPRISING AN ORNAMENTAL MOTIF**

(62) Divisional of application: 21305510.6
(71) Applicant: OPmobility SE, 69007 Lyon (FR)
(72) Inventor: GOERSE, Hergen, 01150 SAINTE-JULIE (FR); BALDY, Guillaume, 01150 SAINTE-JULIE (FR); JOUEN, Thierry, 01150 SAINTE-JULIE (FR)
(74) Representative: LLR

(57) **Abstract**

The invention concerns an automotive vehicle bodywork part (14) comprising an external panel (16) and an internal support (18) connected behind the external panel (16).

The internal support (18) comprises a plurality of ornamental projections (20) projecting from said internal support (18) forming an ornamental motif (22).

The external panel (16) comprises a plurality of through-holes (25) forming a corresponding hole motif, the internal support (18) being assembled to said external panel (16) such that the plurality of ornamental projections (20) are inserted though corresponding through-holes (25).

## Description

The invention relates to the domain of the automotive industry, and particularly to a vehicle bodywork part comprising an ornamental motif.

It is known to provide a bodywork part with a style feature to reinforce the image or signature that the original equipment manufacturer (OEM) wishes to associate with its vehicle model.

For example, the chrome strips running along the side of the vehicle, the rocker panels, the brand logo, the door handle and the mirror caps may all include style features, the design of which is the object of particular care on the part of the vehicle designers. By extension, all body parts that are visible from the outside of the vehicle which are contributing to the general appearance of the vehicle, such as a bumper, etc., may be provided with style features.

It is for example known to provide an automotive vehicle bodywork part comprising an external panel, the front side of which is painted as the rest of the vehicle bodywork using a body colour paint and which is laser-etched to draw the brand logo, and to then have the etched zone undergo a decorative treatment such as chrome plating, painting with a different colour, applying a textured coating, hot-stamping, etc.

However, while it is fairly easy to provide bodywork parts with simple style features such as integrating a single shape with an easy contour as a line or a square or a simple brand logo using the afore-mentioned method, it is not the case when the style feature is required to be more complex, such as a motif or pattern which may for example consist in a repetition of many isolated shapes, all the more when theses shapes have are small, numerous and with a complex contour..

For example, laser-etching numerous zones of a same part to form a motif proves very costly and difficult to achieve while maintaining high quality and/or aesthetic standards, and so is applying a decorative treatment (coatings, plating, laser etching, sand blasting etc.) to each of those zones afterwards. It is in particularly difficult or costly to find materials that are well-suited to both bodywork painting to match the rest of the vehicle as well as decoration. Even more obstacles arise when the style feature is intended to be lighted by a light source placed behind said feature.

The invention therefore aims to provide an automotive vehicle bodywork part including the complex style feature that is a motif, all the while being easy and cheap to manufacture.

To that end, the invention concerns an automotive vehicle bodywork part comprising an external panel and an internal support connected to the external panel, **characterized in that** said internal support comprises a plurality of ornamental projections projecting from said internal support forming an ornamental motif,
wherein said external panel comprises a plurality of through-holes forming a corresponding hole motif, the internal support being assembled to said external panel such that the plurality of ornamental projections are inserted though corresponding through-holes.

Owing to the fact that the bodywork part comprises two distinct parts, i.e. the internal support holding the ornamental projections forming the motif and the external panel which allows the projections to be visible from the outside of the vehicle thanks to the through-holes, each part can be customized to order to respond to different purposes. Hence, it is for example possible to paint the external part in the same way as the rest of the vehicle bodywork, while subjecting the ornamental projections to another treatment to style them at will. It is also possible to choose different materials for that purpose, unlike what is proposed in the prior art where a single panel has to be subjected to different treatments which are not always compatible with each other, or if so, at high manufacturing costs.

Preferably, once the bodywork part is mounted on the overall automotive vehicle, the ornamental projections inserted though corresponding through-holes such that they are visible from the outside of the vehicle.

According to a preferred embodiment, in order to facilitate engagement of the ornamental projections through the through-holes and/or for aesthetic purposes, to ensure better watertightness and to avoid gaps that would lessen the aesthetics of the overall bodywork part, the shape of a through-hole corresponds to the shape of a corresponding ornamental projection.

According to a preferred embodiment, in order to protect the ornamental projections from the outside environment and/or for aesthetic purposes, at least part of an emerging surface of the ornamental projections underwent a decorative treatment, the decorative treatment consisting for example in any one of any combination of the following : applying a layer of coloured paint, chrome plating, applying a layer of metallic coating through physical vapor deposition, applying a layer of varnish or hard-coat, an adhesive decorated film, , hot-stamping, texturing, sand blasting or laser etching. The "emerging surface" is to be understood as a surface that will be visible once the ornamental projection is inserted through the corresponding through-hole.

According to a particular embodiment, when inserted in the through-holes, the ornamental projections project from the external panel. This embodiment is well-suited to situations where more visible projections are desired, or if said projections are to be lighted from behind, allowing for different ambient light effects.

According to a particular embodiment, when inserted in the through-holes, the ornamental projections are flush with the external panel. This embodiment is well-suited to situations where a perfectly smooth bodywork part is sought after.

According to a particular embodiment, the bodywork part further comprises at least one lighting source located proximate to, preferably behind, the internal support such that it lights at least one ornamental projection. Providing a light source proximate to the internal support allows for more striking style features.

Automotive vehicle bodywork part according to any one of the preceding claims, wherein the internal support comprises a planar body from which the ornamental projections project, the ornamental projection preferably being integrally formed with the planar body. It should be noted here that "planar" is to be understood as "substantially planar", that is, the body may by slightly curved in order to follow a slightly curved surface such as a bumper surface for example. Moreover, "planar body" may be construed as either a body that is made of one piece of a disjoined array of planar surfaces. In particular, the planar body may be a full panel, or a panel that is locally hollowed-out, including niches or openings.

Preferably, so as to simplify the structure of the bodywork part and potentially limit the number of required lighting sources, the lighting source is integrated in the planar body or a lighting substrate affixed proximate to, preferably behind the planar body.

According to a particular embodiment allowing for different lighting effects, a lighting guide is integrated in the planar body.

According to a particular embodiment facilitating the alignment and insertion of the ornamental projection through the through-holes and reduce the risks of breakage, the planar body is a flexible membrane.

According to another embodiment, the planar body is a rigid panel.

According to another particular embodiment, the internal support comprises a mesh formed by the plurality of ornamental projections and a plurality of linking members linking each projection to one or more of its direct neighbouring projections.

In order to facilitate the alignment and insertion of the ornamental projection through the through-holes and reduce the risks of breakage, the linking members are configured such as to allow relative movement between the ornamental projections.

In order to further facilitate the alignment and insertion of the ornamental projection through the through-holes and reduce the risks of breakage, the linking members are flexible.

Preferably, so as to simplify the structure of the bodywork part and potentially limit the number of required lighting sources, a lighting guide is integrated in at least one of the linking members.

The invention also concerns a method for manufacturing an automotive vehicle bodywork part according the invention, comprising the following steps :
- applying a decorative treatment to an emerging surface of the ornamental projections,
- painting the external panel,
- inserting the ornamental projections of the internal support through the corresponding through-holes of the external panel
- fixing the internal support to the external panel,

According to a particular embodiment, the decorative treatment consists in any one of any combination of the following : applying a layer of coloured paint, chrome plating, applying a layer of metallic coating through physical vapor deposition, applying a layer of varnish or hard-coat, an adhesive decorated film, hot-stamping, texturing, sand blasting or laser etching.

It should be noted that the steps of painting the external panel and applying an ornamental treatment to the ornamental projections can be undertaken in any order.

### Brief description of the Figures

The invention will be better understood upon reading the following description, which is given only as an example and is made with reference to the attached drawings in which :
- Figure 1 is a schematic perspective view of an automotive vehicle comprising a bodywork part according to a first embodiment of the invention ;
- Figure 2 is a schematic perspective view of the bodywork part of Figure 1;
- Figure 3 is an exploded view of the bodywork part of Figure 2 ;
- Figure 4 is a partial cut view according to plane IV-IV of Figure 2 ;

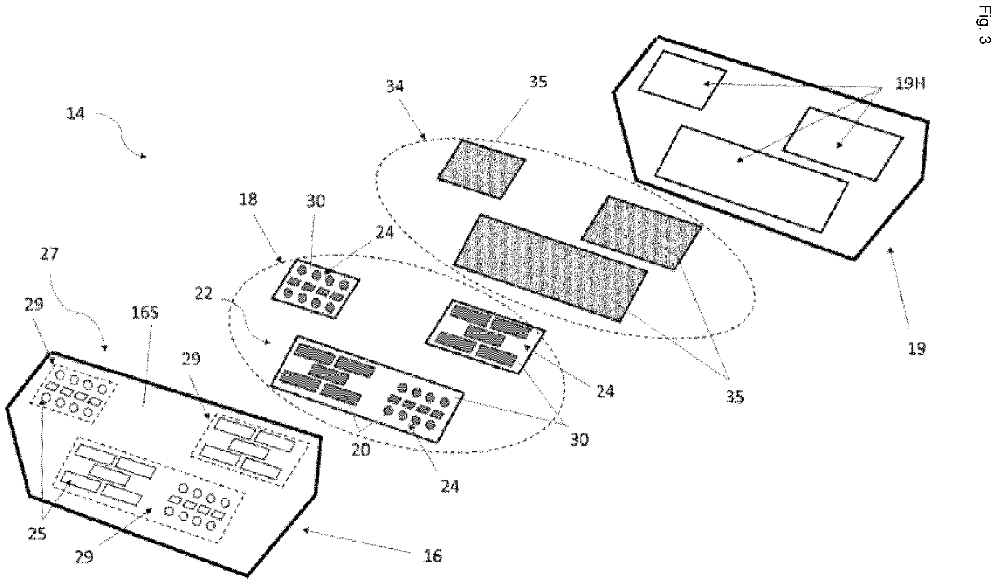

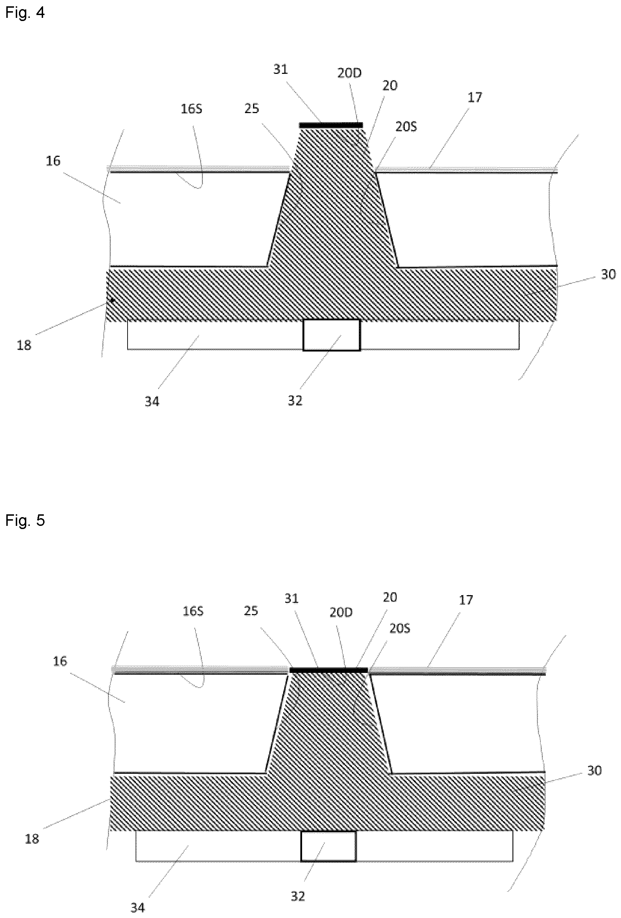

- Figure 3 is a view similar to Figure 4 of a variant of a bodywork part according to the invention ;

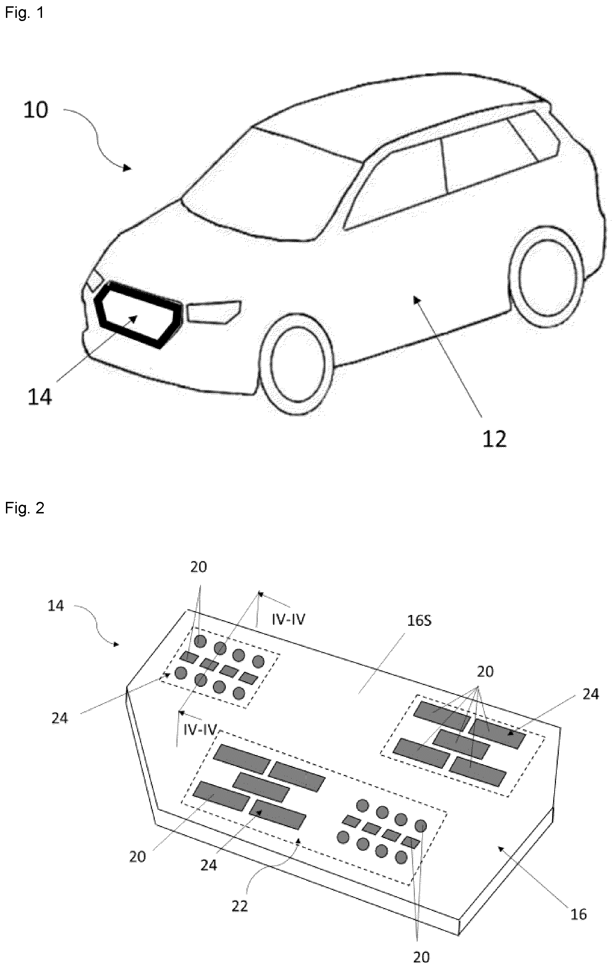

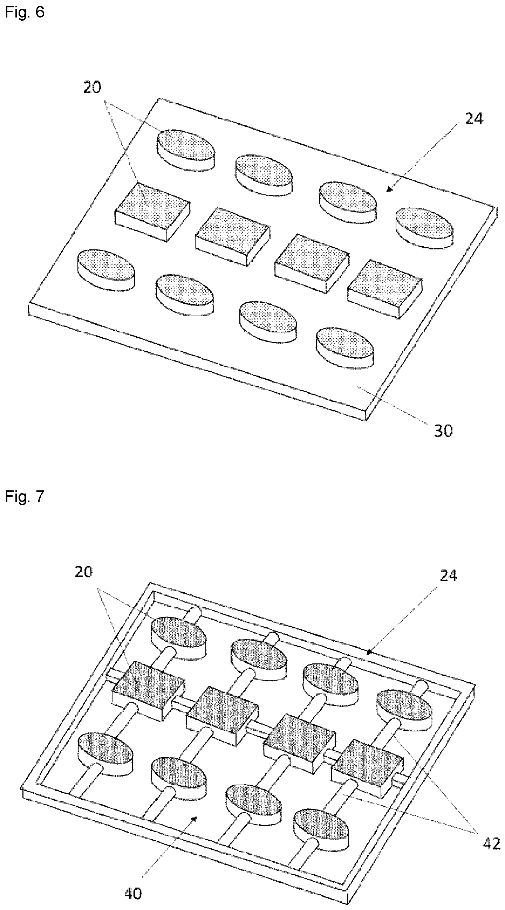

- Figure 6 a schematic perspective view of the internal support of the bodywork part of Figure 2 ;
- Figure 7 is a similar view as Figure 6 of an internal support according to a second embodiment of the invention.

### Detailed Description

An automotive vehicle 10 is depicted on Figure 1. Automotive vehicle 10 comprises a bodywork 12 which itself includes a bodywork part 14.

A bodywork part 14 according to a first embodiment of the invention is depicted on Figure 2. In the example depicted on the Figures, bodywork part 14 is a part of the front bumper. In this particular case, the automotive vehicle being an electrically powered vehicle, the bodywork part 14 may be placed in lieu of a radiator grille for example. However, bodywork part 14 may be a rocker panel, a tailgate exterior part, a spoiler, a fender, etc.

Bodywork part 14 comprises an external panel 16 and an internal support 18 connected to the external panel 16.

Internal support 18 may rest on a rear panel 19 that can for example contribute be part of an already existing structural panel of the vehicle.

External panel 16 here is a substantially planar panel, which may be slightly curved to follow the curve of the front bumper and/or a rocker panel, a tailgate exterior part, spoilers, fenders, etc. External panel 16 can be made from a polymer such as a thermoplastic, for example mainly made out of Polypropylene (also known as PP), or other polymers such as rubber, silicon, etc.

External panel 16 preferably is painted in the same way as the rest of bodywork 12. In other words, a paint coat 17 may be applied upon the front surface 16S (, which is to be understood as the surface that is visible from the outside of the automotive vehicle, of external panel 16. As known by the skilled person, paint coat 17 may include different layers of coatings (not shown in detail in the Figures) such as a primer, a base coat including pigment, and a clear (transparent or translucent) coat.

Internal support 18 preferably can be made from different type of polymers such as Acrylonitrile Styrene Acrylate (also known as ASA), Poly(methyl methacrylate (also known as PMMA), Acrylonitrile butadiene styrene (also known as ABS), Polyamide (also known as PA), Cyclic Olefin Copolymer (also known as COC), Cyclic Olefin Polymer (also known as COP), Polyethylene terephthalate (also known as PET). Internal support 18 may also be made from alloy blends of thermoplastics such as an alloy blend of Polycarbonate and Polybutylene Terephthalate (also known as PC/PBT), or even an alloy blend of Polycarbonate and Poly(methyl methacrylate) (also known as PC/PMMA) or alloy blends including PET. Internal support 18 may be made of thermoplastic material or polymeric materials such as rubber or silicon. Any combination of the above materials may be envisioned. At any rate, this list of materials is in no way limitative of the invention.

Internal support 18 comprises a plurality of ornamental projections 20 projecting from internal support 18 forming an ornamental motif 22.

In the example as shown on the Figures, ornamental motif 22 comprises a plurality of ornamental sub-motifs 24 consisting in a collection of shapes, some of which being repeated here circles, diamonds or rectangles. Any other shape can be envisioned.

According to a non-represented variant, ornamental motif 22 may consist in a repetition of the same shape. Preferably said repetition is homogenously distributed over internal support 18. According to yet another non-represented variant on the Figures, ornamental motif 22 may consist in a homogenous distribution of different shapes.

Any combination of the above embodiments or variants can also be envisioned.

External panel 16 comprises a plurality of through-holes 25 forming a hole motif 27 corresponding to ornamental motif 22. In the example as shown on the Figures, hole motif 27 comprises a plurality of hole sub-motifs 29 consisting of a collection of through-holes 25, some of which being of similar-shaped and corresponding to the sub-motifs 25, , here circles, diamonds or rectangles.

More particularly, in the example as shown on the Figures, the shape of a through-hole 25 corresponds to the shape of a corresponding ornamental projection 20. However, in non-represented variants, they may differ.

Regardless of the chosen shape or dimensions of the ornamental projections 20 and through-holes 25, internal support 18 is assembled to external panel 16 such that the plurality of ornamental projections 20 are inserted through corresponding through-holes 25.

Here, the orientation of the ornamental projections 20 is chosen such that they extend along an axis that is substantially normal, i.e. perpendicular with respect to the external panel 16. However, other configurations may be envisioned.

To be more precise, as can be seen on Figures 4 and 5, the ornamental projections 20 have a section in the plane that is normal to the external panel 16, the dimensions of the section continually decreasing from its base in the vicinity of the internal support 18 towards the top (or front when considering the point of view of a person looking at the vehicle 10) surface 16S of the external panel. This facilitates the alignment of the ornamental projections 20 with the through-holes 25 and insertion through the through-holes 25.

Here the section of the ornamental projections 20 is trapezoidal, but of course this may vary depending on the desired overall shape of the projections 20.

As can be seen on the variants depicted in either Figure 4 or 5, the emerging surface 20S of the ornamental projections 20, which is to be understood as a surface that will be visible once the ornamental projection 20 is inserted through the corresponding through-hole 25, has a frusto-conical flank and a distal surface 20D or top surface. However this surface may vary depending on the overall shape of the ornamental projections 20.

Preferably, the most distal surface 20D is planar, as is the case in both variants represented on Figures 4 and 5, so as to facilitate future decorative treatments as will be explained later on However, this surface may be curved depending on the style requirements.

In the present example, to each ornamental projection 20 corresponds a through-hole 25. However, in non-represented variants, several ornamental projections 20 could be inserted through a single through-hole 25.

In the example shown on Figures 1 to 3, internal support 18 comprises a planar body from which the ornamental projections 20 project. It should be noted here that "planar" is to be understood as "substantially planar", that is, the body may by slightly curved in order to follow a slightly curved surface such as a bumper surface for example.

Here the planar body is actually formed of an array of disjoined planar surfaces 30, one for every ornamental sub-motif 24. In another variant the planar body is made of one piece.

The planar body may be inserted in corresponding housings 19H of the rear panel 19. Here, each planar surface 30 may be held in corresponding housings 19H.

To facilitate the alignment and insertion of the ornamental projection through the through-holes 25 and improving the crashworthiness of the bodywork part 14, planar body may be a flexible membrane. Alternatively, the planar body may be a rigid panel.

In all the embodiments shown on the Figures, ornamental projections 20 locally project from planar body in a normal way, i.e. perpendicularly, with respect to the plane along which planar body extends.

In the embodiment shown on Figures 1 to 6, the ornamental projections 20 are integrally formed with the planar body. For example, considering planar body is made from moulded material, preferably injection-moulded plastic, ornamental projections 20 may be moulded along with planar body.

According to a particular embodiment shown on Figure 4, when inserted in the through-holes 25, the ornamental projections 20 project from the external panel 16. In other words, they are not flush with external panel 16 and form a positive relief, or in other words are "over-flush". This embodiment is well-suited to situations where more visible projections 20 are desired, or if said projections are to be lighted from behind, allowing for different ambient light effects. However, in non-represented variants, the ornamental projections 20 may also not project out of the through-holes 25 and form a negative relief by being "under-flush" to obtain another visual effect.

In the particular example shown on the Figures, the length of the ornamental projections 20 in the direction along which they project from the internal support 18, is greater than the depth of the through-holes 25, i.e. than the thickness of external panel 16.

According to a second embodiment shown on Figure 5, when inserted in the through-holes 25, the ornamental projections are flush with the external panel 16. This embodiment is well-suited to situations where a perfectly smooth bodywork part 14 is sought after.

As can be seen on Figures 4 and 5, only the distal surface 20D of the ornamental 20 projections underwent a decorative treatment, here a decorative coating 31. However, the whole emerging surface 20S or only some part of it may undergo a decorative treatment.

The decorative treatment may consist for example in any one of any combination of the following : applying a layer of coloured paint, chrome plating, applying a layer of metallic coating through physical vapor deposition, applying a layer of varnish or hard-coat, an adhesive decorated film, , hot-stamping, texturing, sand blasting or laser etching

In the embodiment shown on the Figures, and as can be seen on Figures 4 and 5, the bodywork part 14 further comprises at least one lighting source 32 located behind the internal support 18 such that it lights at least one ornamental projection 20.

It should be noted here that lighting source 32 might be located either directly behind an ornamental projection 20, or behind a zone located between two projections 20, for example behind an opaque area of the bodywork part 14 so as to avoid a light hot spot effect and obtain a more ambient effect.

For example, a specific and dedicated lighting source 32 may be located behind every ornamental projection 20 if illumination of all ornamental projections 20 is sought. It can for example be a light-emitting diode (LED) placed behind or proximate every ornamental projection 20.

As an alternative, several lighting sources 32 may be provided such that a lighting source 32 lights several ornamental projections 20.

As yet another alternative, a single lighting source 32 may be used to light all of the ornamental projections 20.

All combinations of the above example may be envisioned.

To facilitate the diffusion of the light emitted by the lighting source 32, the whole internal support 18 or at least one or more ornamental projections 20 may be made from a transparent or translucent material.

In the first embodiment shown on Figures 1 to 6, the lighting source 32 is held by a lighting substrate 34. In the example as shown on the Figures, the lighting substrate 34 is composed of an array of light sub-substrates 35, one for every ornamental sub-motif 24. However, some ornamental sub-motifs 24 could be provided with no lighting sub-substrate 35. The lighting sub-substrates 35 may also be held in housings 19H of the rear panel 19.

So as to simplify the structure of the bodywork part 14 and potentially limit the number of required lighting sources 32, the lighting source 32 may be integrated in the planar body or the lighting substrate 34 affixed to the planar body (or in one or more of the lighting sub-substrates 35 in the case of the example shown on the Figures).

A lighting guide may also be integrated in the planar body. For instance, part of or all planar body can be made translucent or transparent for it to become a light guide.

According to second embodiment of the invention shown on Figure 7, the internal support 16 comprises a mesh 40 formed by the plurality of ornamental projections 20 and a plurality of linking members 42 linking each projection 20 to one or more of its direct neighbouring projections 20.

In order to facilitate the alignment and insertion of the ornamental projection 20 through the through-holes 25 and improving the crashworthiness of the bodywork part 14, the linking members 42 are configured such as to allow relative movement between the ornamental projections 20. This can be obtained through the flexibility of the material and the dimensioning of the membrane or the linking members.

To further facilitate the alignment and insertion of the ornamental projection 20 through the through-holes 25 and improving the crashworthiness of the bodywork part 14, the linking members 42 may be flexible.

One or more lighting sources (not shown on Figure 7) can also be arranged behind or proximate the ornamental projections 20 of mesh 40.

Preferably, a lighting guide is integrated in at least one of the linking members 42. For example, the linking members 42 can be made transparent or translucent to become light guides and thus facilitate the diffusion of the light emitted by the lighting source.

A method for manufacturing an automotive vehicle bodywork part 14 shall now be described.

During a first step, a decorative treatment is applied to a top surface 20S of the ornamental projections 20. The decorative treatment consists in any one of any combination of the following : applying a layer of coloured paint, chrome plating, applying a layer of metallic coating through physical vapor deposition, applying a layer of varnish or hard-coat, an adhesive decorated film, hot-stamping, texturing, sand blasting or laser etching.

Then, external panel 16 is painted. Preferably, the external panel 16 is painted in the same way as the rest of the bodywork 12.

It should be noted that the aforementioned steps may be performed in the reverse order, that its, the external panel may be painted before or after applying the decorative treatment to the ornamental projections 20, or even simultaneously on different work stations for example.

Once the external panel 16 is painted and the decorative treatment is applied to the ornamental projections 20, the ornamental projections 20 of the internal support 18 are inserted through the corresponding through-holes 25 of the external panel 16.

Finally, the internal support 18 is fixed to the external panel 16. The internal support 18 may be fixed to external panel 16 through various methods such as welding, gluing, clipping, laser welding, ultrasonic welding, pressed by the rear panel, etc. depending on the materials used.

The invention is not limited to the presented embodiments and other embodiments will clearly appear to the skilled person. Any combination of the afore-mentioned embodiments of variants is for example explicitly envisioned.

### References list :

10 : Automotive vehicle
12 : Bodywork
14 : Bodywork part
16 : External panel of the bodywork part
16S : Top (front) surface of the external panel
17 : Paint coat
18 : Internal support of the bodywork part
19 : Rear panel
19H: Housing of the rear support
20 : Ornamental projections of the internal support
20D : Distal surface of an ornamental projection
20S : Emerging surface of an ornamental projection
22 : Ornamental motif
24 : Ornamental sub-motifs
25 : Through-holes of the external panel
27 : Hole motif
29 : Hole sub-motifs
30 : Surfaces of the planar body of the internal support
31 : Decorative coating
32 : Lighting source
34 : Lighting substrate
35 : Lighting sub-substrate
40 : Mesh
42 : Linking members of the mesh

## Claims

1. Automotive vehicle bodywork part (14) comprising an external panel (16) and an internal support (18) connected to the external panel (16), wherein said internal support (18) comprises a plurality of ornamental projections (20) projecting from said internal support (18) forming an ornamental motif (22),
wherein said external panel (16) comprises a plurality of through-holes (25) forming a corresponding hole motif (27), the internal support (18) being assembled to said external panel (16) such that the plurality of ornamental projections (20) are inserted though corresponding through-holes (25), wherein the internal support (18) comprises a planar body (30) from which the ornamental projections (20) project, the ornamental projections (20) preferably being integrally formed with the planar body (30), **characterized in that** the planar body (30) is formed of an array of disjoined planar surfaces.

2. Automotive vehicle bodywork part (14) according to claim 1, wherein the shape of a through-hole (25) corresponds to the shape of a corresponding ornamental projection (20).

3. Automotive vehicle bodywork part (14) according to any one of the preceding claims, wherein a top surface (20S) of the ornamental projections underwent a decorative treatment, the decorative treatment consisting for example in any one of any combination of the following : applying a layer of coloured paint, chrome plating, applying a layer of metallic coating through physical vapor deposition, applying a layer of varnish or hard-coat, an adhesive decorated film, hot-stamping, texturing, sand blasting or laser etching.

4. Automotive vehicle bodywork part (14) according to any one of the preceding claims, wherein when inserted in the through-holes (25), the ornamental projections (20) project from the external panel (16).

5. Automotive vehicle bodywork part (14) according to any one of claims 1 to 3, wherein when inserted in the through-holes (25), the ornamental projections (20) are flush with the external panel (16).

6. Automotive vehicle bodywork part (14) according to any one of the preceding claims, further comprising at least one lighting source (32) located proximate to, preferably behind the internal support (18) such that it lights at least one ornamental projection (20).

7. Automotive vehicle bodywork part (14) according to claim 6, wherein the lighting source (32) is integrated in the planar body (30) or a lighting substrate (34) affixed to the planar body (30).

8. Automotive vehicle bodywork part (14) according to claim 7, wherein a lighting guide is integrated in the planar body (30).

9. Automotive vehicle bodywork part (14) according to any one of the preceding claims, wherein the planar body (30) is a flexible membrane.

10. Automotive vehicle bodywork part (14) according to any one of claims 1 to 8, wherein the planar body (30) is a rigid panel.

11. Method for manufacturing an automotive vehicle bodywork part (14) according to any one of the preceding claims, comprising the following steps :
- applying a decorative treatment to at least part of an emerging surface (20S) of at least one ornamental projection (20),
- painting the external panel (16),
- inserting the ornamental projections (20) of the internal support (18) through the corresponding through-holes (25) of the external panel (16),
- fixing the internal support (18) to the external panel (16),

12. Method for manufacturing an automotive vehicle bodywork part (14) according to claim 11, wherein the decorative treatment consists in any one of any combination of the following: applying a layer of coloured paint, chrome plating, applying a layer of metallic coating through physical vapor deposition, applying a layer of varnish or hard-coat, an adhesive decorated film, hot-stamping, texturing, sand blasting or laser etching.
